# EUROPÄISCHE PATENTSCHRIFT

(11) **EP 1 935 948 B1**
(45) Veröffentlichungstag und Bekanntmachung des Hinweises auf die Patenterteilung: **18.01.2012**
(21) Anmeldenummer: 06026440.5
(22) Anmeldetag: 20.12.2006
(51) Int. Cl.: C09C 3/00, C09C 3/06, C09C 3/08, C09K 11/02, C09K 11/77, C09C 1/36

(54) **Oberflächenbehandlungsverfahren für Nanopartikel**
Surface treatment method for nanoparticles
Procédé de traitement de surface pour nanoparticules

(43) Veröffentlichungstag der Anmeldung: 25.06.2008
(73) Patentinhaber: Centrum für Angewandte Nanotechnologie (CAN) GmbH, 20146 Hamburg (DE)
(72) Erfinder: Haase, Markus, 49076 Osnabrück (DE)
(74) Vertreter: HOFFMANN EITLE

(56) Entgegenhaltungen:
- EP-A1- 1 473 348
- WO-A-02/051945
- DATABASE WPI Week 200103 Derwent Publications Ltd., London, GB; AN 2001-018917 XP002437716 & JP 2000 234087 A (CANON KK) 29. August 2000 (2000-08-29)
- FARMER S C ET AL: "PHOTOLUMINESCENT POLYMER/QUANTUM DOT COMPOSITE NANOPARTICLES" CHEMISTRY OF MATERIALS, AMERICAN CHEMICAL SOCIETY, WASHINGTON, US, Bd. 13, Nr. 11, November 2001 (2001-11), Seiten 3920-3926, XP001108765 ISSN: 0897-4756
- HAASE M ET AL: "Synthesis and properties of colloidal lanthanide-doped nanocrystals" JOURNAL OF ALLOYS AND COMPOUNDS, ELSEVIER SEQUOIA, LAUSANNE, CH, Bd. 303-304, Mai 2000 (2000-05), Seiten 191-197, XP004204357 ISSN: 0925-8388

## Beschreibung

### GEBIET DER ERFINDUNG

Die vorliegende Erfindung bezieht sich auf ein Oberflächenbehandlungsverfahren für Nanopartikel. Insbesondere bezieht sich die vorliegende Erfindung auf ein Oberflächenbehandlungsverfahren für Nanopartikel, durch das die Dispersionsfähigkeit der Nanopartikel in einem Lösungsmittel erhöht wird und in dem eine Mischung aus einer mehrwertigen Säure und einer stickstoffhaltigen Base, z.B. einem Amin, oder ein Salz aus einer mehrwertigen Säure und einer stickstoffhaltigen Base, wie ein Ammoniumsalz, oder auch ein entsprechendes Betain eingesetzt wird. Die vorliegende Erfindung bezieht sich auch auf oberflächenmodifizierte Nanopartikel, die durch das erfindungsgemäße Verfahren erhältlich sind.

### STAND DER TECHNIK

Eine Vielzahl von Verfahren zur Herstellung von Nanopartikeln ist bekannt. In diesem Zusammenhang bezieht sich der Ausdruck "Nanopartikel" auf Partikel mit einer Größe von weniger als 1 µm. Solche Nanopartikel besitzen ein breites Spektrum an Anwendungen, z.B. bei der Herstellung von Tinten, einschließlich Sicherheitsdrucktinten, bei der Oberflächenmodifizierung von metallischen oder nicht metallischen Substraten, als phosphoreszierende oder fluoreszierende Materialien, als Markierung biologischer Moleküle, als Polymerfüllstoff, als Röntgenkontrastmittel etc.

Die Synthesewege zur Herstellung solcher Nanopartikel sind dem Fachmann bekannt. Exemplarisch können hier die Veröffentlichungen WO 02/20696 A1, EP 1 473 347 A1 und EP 1 473 348 A1 genannt werden. Auch ist das erfindungsgemäße Verfahren zum Beispiel auf die in von Haase et al. beschriebenen Nanopartikel anwendbar (Journal of Physical Chemistry B, 104, 2824-2828).

Nanopartikel, z.B. im Größenbereich zwischen 2 und 20 nm, können heute in hoher Qualität durch Reaktion in hochsiedenden Lösungsmitteln hergestellt werden. Die im allgemeinen gute Dispergierbarkeit solcher im wesentlichen anorganischen bzw. kristallinen Partikel wird durch an die Oberfläche der Nanopartikel bindende organische Moleküle maßgeblich beeinflusst. Diese Moleküle enthalten in der Regel eine oder mehrere, vorzugsweise polare chemische Gruppen, die an die Oberfläche der Nanopartikel binden. Diese Bindung kann durch ionische Wechselwirkungen und/oder kovalente Bindungen mit der Partikeloberfläche entstehen.

Neben den mit der Partikeloberfläche wechselwirkenden Bestandteil enthalten diese organischen Moleküle im allgemeinen noch mindestens einen weiteren Bestandteil, dessen Polarität die Dispergierbarkeit in einem gegebenen Lösungsmittel bestimmt. Dies kann in einigen Fällen auch der Gleiche wie die mit der Nanopartikeloberfläche interagierende Bestandteil sein. Beispielsweise führen lange Alkanketten zu einer erhöhten Löslichkeit (d.h. Dispergierbarkeit) der Partikel in schwach polaren oder unpolaren Lösungsmitteln wie Hexan, Toluol oder Chloroform.

In der Regel werden die mit der Oberfläche wechselwirkenden Gruppen bereits während der Synthese der Nanopartikel zur Kontrolle des Partikelwachstums (und damit der Partikelgröße) und zur Erhöhung der Löslichkeit (Dispergierbarkeit) der Partikel im Reaktionsmedium zugesetzt. Außerdem wird durch sie die Zusammenlagerung von Partikeln, d.h. die Bildung von Agglomeraten, verhindert.

Damit die Partikel jedoch während des Wachstumsprozesses in Lösung durch Reaktion mit den eingesetzten Edukten Material anlagern können, müssen die organischen Moleküle unter Synthesebedingungen (z.B. Reaktionstemperatur) von der Oberfläche zumindest teilweise verdrängbar sein. Daher darf die Bindungsstärke der organischen Moleküle an die Oberfläche einen bestimmten maximalen Wert nicht überschreiten, da sie ansonsten nicht durch Partikelbestandteile, die zum Wachstum der Partikel benötigt werden, verdrängt werden können.

Die so hergestellten Nanopartikel besitzen somit an ihrer Oberfläche organische Moleküle, welche die Dispergierbarkeit im Reaktionsmedium sicherstellen. Vom industriellen Standpunkt her ist es jedoch wünschenswert, die Nanopartikel nach der Synthese zu isolieren, um sie einfacher lagern zu können. Bei der Isolierung der Nanopartikel wird gewöhnlich ein Wasch- oder Abtrennungsschritt durchgeführt. Dies kann jedoch zu dem Problem führen, dass ein Teil der an der Oberfläche anhaftenden organischen Moleküle in den auf die Synthese folgenden Wasch- und Reinigungsschritten von der Oberfläche der Nanopartikel entfernt wird. Dies setzt die Dispergierbarkeit der Partikel herab. Es ist somit ein Verfahren erforderlich, das die Dispergierbarkeit bzw. Löslichkeit solcher Nanopartikel nach der Isolierung, die ggf. einen Wasch- bzw. Reinigungsschritt umfasst, verbessert.

Ferner ist zu berücksichtigen, dass die während und nach der Synthese an die Oberfläche der Nanopartikel bindenden organischen Moleküle auf das Reaktionsmedium eingestellt sind. Beispielsweise werden bei sehr unpolaren Reaktionsmedien organische Moleküle mit unpolaren Gruppen verwendet. Es ist jedoch für diverse Anwendungen wünschenswert, eine Dispersion zu erhalten, in der die Nanopartikel in einem anderen Lösungsmittel als dem Reaktionsmedium mit gegebenenfalls vom Reaktionsmedium unterschiedlichen Eigenschaften (z.B. Polarität) dispergiert sind. Gesucht wird deshalb ein möglichst allgemein einsetzbares Verfahren, mit dem die Dispergierbarkeit der Partikel in einem gewählten Lösungsmittel erhöht werden kann. Das Lösungsmittel sollte dabei nicht auf eines der im Reaktionsmedium verwendeten Bestandteile beschränkt, sondern möglichst frei wählbar sein, da die Polarität des Lösungsmittels meist durch die Art der Anwendung vorgegeben ist.

### ZUSAMMENFASSUNG DER ERFINDUNG

Die oben angesprochen Probleme werden durch das erfindungsgemäße Verfahren zur oberflächenbehandlung von Nanopartikeln gelöst. Die Aufgabe der vorliegenden Erfindung besteht darin, ein Oberflächenbehandlungsverfahren zur Verfügung zu stellen, durch das die Dispergierbarkeit der behandelten Nanopartikel verbessert wird. Insbesondere ist es eine Aufgabe der vorliegenden Erfindung, die Dispergierbarkeit von nach deren Synthese isolierten Nanopartikeln zu erhöhen, die nach der Synthese ggf. einem Waschschritt unterzogen worden sind.

Die Erfindung betrifft somit ein Oberflächenbehandlungsverfahren zur Verbesserung der Dispersionsfähigkeit von Nanopartikeln, die nach dem Syntheseschritt isoliert wurden und gegebenenfalls nach der Isolierung einem oder mehreren Waschschritten unterzogen wurden, wobei das Verfahren eine Behandlung der Nanopartikel mit (i) einer oder mehreren organischen stickstoffhaltigen Base(n) und einer oder mehreren mehrwertigen Säure(n) oder (ii) einem Salz aus einer oder mehreren organischen stickstoffhaltigen Base(n) und einer oder mehreren mehrwertigen Säure(n), oder (iii) mit einem Betain, das innerhalb des Moleküls eine oder mehrere stickstoffhaltige basische Gruppe(n) und eine oder mehrere mehrwertige Suregruppe(n) enthält, umfasst.

Die Ausdrücke "mehrwertige Säuregruppe" bzw. "mehrwertige Säure", wie sie hierin verwendet werden, bezeichnen eine Säure bzw. eine Säuregruppe, die bei vollständiger Dissoziation 2 oder mehr Protonen freisetzen kann, die im nicht-dissoziierten Zustand (z.B. bei pH 0) an ein Sauerstoffatom der Säure bzw. der Säuregruppe gebunden sind.

Im nachfolgenden wird auf die Kombination von stickstoffhaltigen Base(n) und mehrwertigen Säure(n) als "Base/Säure-Kombination" Bezug genommen. Dieser Ausdruck umfasst sowohl die Kombination (i), das Salz (ii), als auch das Betain (iii), soweit sich nichts anderes aus dem Zusammenhang ergibt.

### GENAUE BESCHREIBUNG DER ERFINDUNG

Das erfindungsgemäße Verfahren umfasst die Oberflächenbehandlung von Nanopartikeln mit einer Mischung einer stickstoffhaltigen Base und einer mehrwertigen Säure bzw. deren Salz nach der Synthese der Nanopartikel und deren Abtrennung vom Reaktionsmedium, wobei nach der Abtrennung ggf. ein Waschschritt durchgeführt wird. Das zur Abtrennung der Nanopartikel nach der Synthese verwendete Verfahren ist nicht besonders beschränkt, jedoch können Zentrifugation, Filtration sowie Entfernung des Lösungsmittels durch Verdampfen bei ggf. reduziertem Druck beispielhaft angeführt werden.

Mit einem "Waschschritt" sind erfindungsgemäß solche optionalen Behandlungsschritte gemeint, die nach der Isolierung der Nanopartikel (z.B. durch Fällung) durchgeführt werden, um die Nanopartikel zu reinigen, beispielsweise um Reste der Ausgangsmaterialien oder gegebenenfalls noch andere in der Reaktionsmischung vorhandene chemische Stoffe, die an der Oberfläche der Nanopartikel haften, zu entfernen. Die Waschschritte werden mit einem geeigneten Lösungsmittel durchgeführt, welches man vorzugsweise so auswählt, dass die isolierten Nanopartikel keine oder nur eine geringe Löslichkeit darin zeigen. Bei der Hydrothermalsynthese von Nanopartikeln, wie sie beispielsweise in M. Haase et al. "Synthesis and properties of colloidal lanthanide-doped nanocrystals" in Journal of Alloys and Compounds 303-304 (2000) 191-197 oder in H. Meyssamy et al. in Advanced Materials 1999, 11, Nr.10, Seite 840-844 beschrieben ist, verwendet man vorzugsweise ein wassermischbares Lösungsmittel, beispielsweise einen wassermischbaren Ether wie THF, ein wassermischbares Keton, wie Aceton, oder einen wassermischbaren Alkohol, wie Methanol oder Ethanol. Als wassermischbar werden solche Lösungsmittel angesehen, die bei 20°C in jedem Mischungsverhältnis mit Wasser vollständig mischbar sind. Als "Hydrothermalsynthese" wird die Synthese von Nanopartikeln aus einer geeigneten Kationen- und einer geeigneten Anionenquelle in Wasser als einzigem Reaktionsmedium unter Druck (z. B. in einem Autoklaven) bei höherer Temperatur (vorzugsweise bei mehr als 150°C) bezeichnet. Bei der organischen Synthese von Nanopartikeln, vorzugsweise gemäß WO 02/20696, in einem koordinierenden Lösungsmittel mit einem Phosphor- oder Stickstoffatom mit einem freien Elektronenpaar verwendet man zum Waschen vorzugsweise Methanol. Bei der Synthese von Sulfaten gemäß WO 2004/046035 kann man zum Waschen die gleichen Lösungsmittel einsetzen wie bei der Hydrothermalsynthese. Werden Sulfate gemäß WO 2005/105933 synthetisiert, ist zu beachten, dass die erhaltenen Nanopartikel auch in Methanol dispergierbar sein können und somit die Verwendung anderer wassermischbarer Alkohole oder die Verwendung eines wassermischbaren Ketons oder Ethers zu empfehlen ist. Bei der Synthese von Vanadaten gemäß WO 2004/06714 oder Titanoxid-Nanopartikeln gemäß PCT/EP 2004/012376 kann man erneut die gleichen wassermischbaren Lösungsmittel einsetzen wie bei der Hydrothermalsynthese.

Die im erfindungsgemäßen Verfahren einsetzbaren Nanopartikel unterliegen keinen besonderen Beschränkungen. Im Sinne dieser Erfindung bezeichnet der Begriff "Nanopartikel" Partikel mit einer Größe (längste Achse) von weniger als 1 µm, vorzugsweise weniger als 300 nm, stärker bevorzugt zwischen 1 - 25 nm, und am stärksten bevorzugt zwischen 2 - 10 nm. Diese Nanopartikel können aus einem im Wesentlichen bezüglich der Struktur homogen Material sein. Es kann sich jedoch auch um Nanopartikel handeln, die aus Schichten aufgebaut sind, wie z.B. die in der EP 1 473 347 und EP 1 473 348 beschriebenen Kern/Schale-Partikel. Die Nanopartikel können kristallin, teilkristallin oder amorph sein, wobei kristalline Materialien bevorzugt sind. Die Form der Nanopartikel unterliegt ebenfalls keinerlei Beschränkungen. Insbesondere kann es sich bei den Nanopartikeln z.B. um ellipsoide, kugelförmige, plättchenförmige, nadelförmige (Länge/Breite ≥ 2, vorzugsweise ≥ 5), kubische, rhombische und unregelmäßig strukturierte Nanopartikel handeln.

Die stickstoffhaltige Base unterliegt keinen besonderen Beschränkungen. Sie enthält ein oder mehrere basische(s) Stickstoffatom(e). Insbesondere können aliphatische, alicyclische und aromatische stickstoffhaltige Basen verwendet werden. Der Begriff "Base" bezeichnet hierbei Verbindungen, die in der Lage sind, durch Aufnahme eines Protons ein Kation zu bilden (z.B. ein Ammoniumion im Falle eines Amins). Die Verbindungen besitzen vorzugsweise einen pK_{B}-Wert von 2 bis 6, insbesondere 3 bis 5 (25° C, wässrige Lösung).

Als Vertreter der aliphatischen stickstoffhaltigen Base zur Verwendung in dem erfindungsgemäßen Verfahren können primäre (NH₂R), sekundäre (NHRR') und tertiäre (NRR'R") Amine genannt werden. Die Reste R, R' und R" können jeweils gleich oder unterschiedlich sein und bezeichnen ggf. einfach oder mehrfach substituierte aliphatische Kohlenwasserstoffreste mit bis zu 20 Kohlenstoffatomen, die jeweils gesättigt oder ungesättigt sein können, wobei die ungesättigten Kohlenwasserstoffreste von 1 - 4, vorzugsweise 1 oder 2 Kohlenstoff-Kohlenstoff-Doppelbindungen enthalten. Auch können diese Reste geradkettig oder verzweigt sein. Reste mit bis zu 16 Kohlenstoffatomen sind bevorzugt. Auch sind geradkettige oder verzweigte Alkylreste bevorzugt. Besonders bevorzugt werden Amine mit Resten R, R' bzw. R" mit einer Kohlenstoffzahl von 3 - 14 und stärker bevorzugt 6 - 12 eingesetzt. Hierbei sind insbesondere sekundäre und tertiäre Amine, und am stärksten tertiäre Amine, mit solchen Resten R, R' und R" bevorzugt, da sie eine bessere Kompatibilität mit organischen Lösungsmitteln aufweisen. Die Gesamtkohlenstoffzahl der aliphatischen stickstoffhaltigen Base beträgt zwischen 1 und 60, bevorzugt 6 bis 50, stärker bevorzugt 8 bis 40, und am stärksten bevorzugt 12 bis 36.

Als Substituenten der Reste R, R' bzw. R" können Cycloalkylgruppen, Halogenatome (F, Cl, Br, I), Cyanogruppen, Hydroxygruppen, aromatische Gruppen, wie Benzyl oder Phenyl, die auch wiederum mit einer oder mehrer der hier angeführten Gruppen substituiert sein können, Ethergruppen und Estergruppen angeführt werden. Diese Substituenten werden, soweit sie Kohlenstoffatome enthalten, auf die oben angegebenen Kohlenstoffzahlen der Reste R, R' bzw. R" der Amine bzw. die Gesamtkohlenstoffzahl angerechnet.

Auch können zwei von R, R' und ggf. R" zusammen einen Ring bilden. Hierbei ist bevorzugt, dass die entsprechenden Reste R, R' und R" zusammen einen 5 - 7-gliedrigen Ring bilden. Ein Cyclohexylring ist am stärksten bevorzugt.

Bevorzugte Vertreter der primären Amine sind Propylamin, Butylamin, Pentylamin, Hexylamin, Heptylamin, Octylamin, Nonylamin, Decylamin, Undecylamin, Dodecylamin, Tridecylamin und Tetradecylamin, wobei Hexylamin, Heptylamin, Octylamin, Nonylamin, Decylamin, Undecylamin und Dodecylamin bevorzugt sind, die ggf. substituiert sein können.

Bevorzugte Vertreter der sekundären Amine sind Dipropylamine, Dibutylamin, Dipentylamin, Dihexylamin, Diheptylamin, Dioctylamin, Dinonylamin, Didecylamin, Diundecylamin, Didodecylamin, Ditridecylamin und Ditetradecylamin, wobei Dihexylamin, Diheptylamin, Dioctylamin, Dinonylamin, Didecylamin, Diundecylamin und Didodecylamin bevorzugt sind, die ggf. substituiert sein können.

Bevorzugte Vertreter der tertiären Amine sind Tripropylamin, Tributylamin, Tripentylamin, Trihexylamin, Triheptylamin, Trioctylamin, Trinonylamin, Tridecylamin, Triundecylamin, Tridodecylamin, Tritridecylamin und Tritetradecylamin, wobei Trihexylamin, Triheptylamin, Trioctylamin, Trinonylamin, Tridecylamin, Triundecylamin und Tridodecylamin bevorzugt sind. die ggf. substituiert sein können.

Der Begriff "alicyclische stickstoffhaltige Base" bezeichnet Verbindungen mit z.B. 2 - 30 Kohlenstoffatomen, die ein oder mehrere Stickstoffatom(e) als Bestandteil zumindest eines nichtaromatischen Rings enthalten. Dieser Ring kann auch Heteroatome wie Sauerstoff oder Schwefel enthalten. Auch umfasst der Begriff "alicyclische stickstoffhaltige Base" Verbindungen mit zwei oder mehr Ringsystemen, die ggf. kondensiert sein können, wobei jedoch Einfachringsysteme bevorzugt sind. Hierbei können das oder die neben dem stickstoffhaltigen Ring ggf. vorliegenden Ringsystem(e) alicyclisch oder aromatisch sein, und sie können ggf. andere Atome wie S oder O als Bestandteil des Rings enthalten. Verbindungen mit 3 - 16 Kohlenstoffatomen sind bevorzugt, und Verbindungen mit 4 - 11 Kohlenstoffatomen sind stärker bevorzugt, wobei Verbindungen mit 4 - 6 Kohlenstoffatomen weiterhin stärker bevorzugt sind. Diese Verbindungen können ggf. mit einem oder mehreren Substituenten, die oben für die aliphatischen stickstoffhaltigen Basen angeführt sind, substituiert sein, wobei diese(r) ggf. vorhandenen Substituent(en) auf die oben angegebene Kohlenstoffzahl angerechnet wird. Als bevorzugte Vertreter der alicyclischen stickstoffhaltigen Base können 4-, 5-, 6-, 7- und 8-gliedrige Ringsysteme genannt werden, die als Bestandteil des Rings eine Amin- (-NH-) oder Imingruppe (=N-) enthalten. Als Beispiele für alicyclische stickstoffhaltigen Basen können Piperidin, Piperazin, Pyrrolidin, Pyrazol und Morpholin genannt werden.

Der Begriff "aromatische stickstoffhaltige Base" bezeichnet Verbindungen mit 3 - 30 Kohlenstoffatomen, die ein oder mehrere Stickstoffatom(e) als Bestandteil zumindest eines aromatischen Rings enthalten. Dieser Ring kann auch Heteroatome wie Sauerstoff oder Schwefel enthalten. Auch umfasst dieser Begriff Verbindungen mit zwei oder mehr Ringsystemen, die ggf. kondensiert sein können, wobei jedoch Einfachringsysteme bevorzugt sind. Hierbei können das oder die neben dem stickstoffhaltigen Ring ggf. vorliegenden Ringsystem(e) alicyclisch oder aromatisch sein, und sie können ggf. andere Atome wie S oder O als Bestandteil des Rings enthalten. Verbindungen mit 4 - 15 Kohlenstoffatomen sind bevorzugt, und Verbindungen mit 5 - 11 Kohlenstoffatomen sind stärker bevorzugt. Diese Verbindungen können ggf. mit einem oder mehreren Substituenten, die oben für die aliphatischen stickstoffhaltigen Basen angeführt sind, substituiert sein, wobei diese(r) ggf. vorhandenen Substituent(en) auf die oben angegebene Kohlenstoffzahl angerechnet wird. Als bevorzugte Vertreter der aromatischen stickstoffhaltigen Base können 4-, 5-, 6-, 7- und 8-gliedrige Ringsysteme genannt werden. Beispielhafte Vertreter der aromatischen stickstoffhaltigen Basen sind Pyridin, Pyrimidin, Chinolin, Isochinolin, Indol, Pyrrol, Acridin, Pyrazin, Chinoxalin, Pteridin, Purin, Imidazol, Thiazol und Oxazol. Pyridin ist besonders bevorzugt.

Die in dem erfindungsgemäßen Behandlungsverfahren in Kombination mit stickstoffhaltiger Base zu verwendende mehrwertige Säure ist nicht besonders beschränkt. Sie kann mehr als ein Proton freisetzen. Dies können organische Säuren als auch Mineralsäuren sein. Beispiele geeigneter Säuren beinhalten phosphorhaltige Säuren wie Phosphorsäure, Di-Phosphorsäure, Pyrophosphorsäure, Poly-Phosphorsäuren, Phosphonsäuren, Di-Phosphonsäuren, Poly-Phosphonsäuren, Phosphorsäuremonoester und organische Phosphor- bzw. Phosphonsäuren, die sich von Phosphorsäure oder Phosphonsäure ableiten.

Die organischen phosphorhaltigen Säuren können zumindest eine aliphatische, alicyclische oder aromatische organische Gruppe enthalten, die unter anderem ggf. mit solchen Substituenten substituiert sein kann, die oben beispielhaft für die Substituenten der Reste R, R' bzw. R" der aliphatischen stickstoffhaltigen Base angeführt sind. Die Gesamtkohlenstoffzahl der organischen phosphorhaltigen Säuren beträgt vorzugsweise nicht mehr als 26, insbesondere nicht mehr als 20 pro P-Atom. Hierbei werden die gegebenenfalls vorhandenen Substituenten auf die Kohlenstoffzahl angerechnet.

Im Fall von organischen Monophosphonsäuren können diese vorzugsweise durch die folgende Formel (1) dargestellt werden: 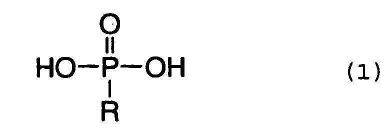 worin R eine geradkettige oder verzweigte, gesättigte oder ungesättigte Kohlenwasserstoffgruppe sein kann, die vorzugsweise von 1 bis 18, vorzugsweise von 2 bis 12 und stärker bevorzugt 3 - 6 Kohlenstoffatome enthält und ggf. Heteroatome aufweist. Der Rest R kann ferner von 1 - 4, vorzugsweise 1 oder 2 Kohlenstoff-Kohlenstoff-Doppelbindungen enthalten. Der Rest R kann aliphatisch oder aromatisch sein und umfasst beispielsweise eine Cycloalkyl-, Cycloalkenyl-, Alkyl-, Alkenyl-, oder Arylgruppe. Der Rest R kann jeweils unsubstituiert oder einfach oder mehrfach substituiert sein. Die Substituenten von R werden vorzugsweise unter Cycloalkylgruppen, vorzugsweise mit 5 - 7 Kohlenstoffatomen, stärker bevorzugt 6 Kohlenstoffatome, Halogenatomen (F, Cl, Br, I), Cyanogruppen, Carboxygruppen, Hydroxygruppen und aromatischen Gruppen (Aryl), wie Benzyl oder Phenyl, ausgewählt. Bei aromatischen Resten R kann 1 aromatischer Ring vorliegen, oder es kann ein kondensiertes Ringsystem von 2 oder 3 Ringen vorliegen.

In dem Rest R können ein oder mehrere sekundäre Kohlenstoffatome (-CH₂-) durch ein Heteroatom, z.B. ein Sauerstoffatom (-O-), Schwefelatom (-S-) oder durch eine sekundäre Aminogruppe (-NH-) ersetzt werden. In verzweigten Kohlenwasserstoffresten R können ein oder mehrere tertiäre Kohlenstoffatome (>CH-) durch ein N-Atom ersetzt werden. Die Gesamtzahl an Heteroatomen in dem Rest R beträgt vorzugsweise nicht mehr als 6 und stärker bevorzugt nicht mehr als 4 (z.B. 1, 2 oder 3). Darüber hinaus ist es bevorzugt, dass die Heteroatome nicht in direkter Nachbarschaft zu den Phosphonsäuregruppen und/oder nicht direkt miteinander verbunden vorliegen. Die ggf. vorhandenen Heteroatome werden auf die hier angegebenen Kohlenstoffzahlen nicht angerechnet.

Beispiele bevorzugter organischer Phosphonsäuren beinhalten Phenylphosphonsäure oder Tetradecylphosphonsäure.

Die organischen Diphosphonsäuren können vorzugsweise durch die folgenden Formel (2) dargestellt werden:

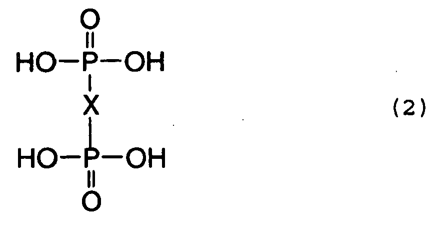

Hierin stellt X stellt eine geradkettige oder verzweigte, gesättigte oder ungesättigte zweiwertige Kohlenwasserstoffgruppe mit vorzugsweise 1 bis 18, stärker bevorzugt 2 bis 12 und noch stärker bevorzugt 3 - 6 Kohlenstoffatome dar, worin X von 1 - 4, vorzugsweise 1 oder 2 Kohlenstoff-Kohlenstoff-Doppelbindungen enthalten kann. Beispiele für X umfassen eine Cycloalkylen-, Cycloalkenylen-, Alkylen-, Alkenylen- oder Arylengruppe.

X erhält man vorzugsweise aus dem Rest R der Formel (1), indem durch Abstraktion eines H-Atoms von einem Kohlenstoffatom eine zweite Bindungsstelle für den zweiten Phosphonsäurerest vorliegt. Die Abstraktion des H- Atoms kann auch an einem der zuvor genannten C-haltigen Substituenten des Rests R erfolgen. Ferner können ein oder mehrere C-Atome durch Heteroatome ersetzt werden. Das zu Formel (1) gesagte gilt entsprechend.

Die Phosphonsäuregruppen können am gleichen Kohlenstoffatom oder an unterschiedlichen Kohlenstoffatomen von X vorhanden sein, wobei es bevorzugt ist, dass sie am gleichen Kohlenstoffatom vorhanden sind.

Beispiele bevorzugter Diphosphonsäuren beinhalten 1-Hydroxyethan-1,1,-diphosphonsäure oder Morpholinomethandiphosphonsäure

Organische Polyphosphonsäuren enthalten mehr als 2 Phosphonsäuregruppen und werden vorzugsweise durch die folgende Formel (3) dargestellt:

Y[P(O)(OH)₂]ₙ (3)

Hierin stellt n eine ganze Zahl dar, die größer als 2 ist, und Y stellt eine geradkettige oder verzweigte, gesättigte oder ungesättigte n-wertige Kohlenwasserstoffgruppe mit vorzugsweise 1 bis 18, stärker bevorzugt 2 bis 12 und noch stärker bevorzugt 3 - 6 Kohlenstoffatomen dar. Y kann von 1 - 4, vorzugsweise 1 oder 2 Kohlenstoff-Kohlenstoff-Doppelbindungen enthalten. Vorzugsweise stellt n eine ganze Zahl von 3 bis 6, und stärker bevorzugt 3 oder 4 dar.

Y erhält man vorzugsweise aus dem Rest R der Formel (1), indem man durch Abstraktion von n-1 H-Atomen von n-1 Kohlenstoffatomen n-1 weitere Bindungsstelle für n-1 Phosphonsäuregruppen schafft. Die Abstraktion von einem oder mehreren H- Atomen kann auch an einem der zuvor genannten C-haltigen Substituenten des Rests R erfolgen. Ferner können ein oder mehrere C-Atome durch Heteroatome ersetzt werden. Das zu Formel (1) gesagte gilt entsprechend.

Die Phosphonsäuregruppen können (im Fall dass n= 3 oder 4 ist) mit dem gleichen Kohlenstoffatom der Y-Gruppe verbunden sein, oder sie können (im Fall von 3, 4, 5 oder 6 Phosponsäuregruppen) mit jeweils unterschiedlichen Kohlenstoffatomen verbunden sein. Auch können 2 oder 3 Phosphonsäuregruppen an ein Kohlenstoffatom gebunden sein, und die ggf. vorhanden übrigen Phosponsäuregruppen können an ein anderes Kohlenstoffatom oder an mehrere andere Kohlenstoffatome gebunden sein.

Beispiele einer Polyphosphonsäure beeinhalten Aminotri(methylenphosphonsäure), Diethyltriaminpenta(methylenphosphonsäure), Ethylendiamintetra-(methylenphosphonsäure) und Nitrilo-tri-(methylenphosphonsäure)

Bei den Phosphorsäuremonoestern handelt es sich um Verbindungen, die vorzugsweise durch die folgende allgemeine Formel (4) dargestellt werden können:

R-O-PO(OH)₂ (4)

Hierin hat R die gleiche Bedeutung wie oben für die organischen Monophosphonsäuren der Formel (1) definiert.

Auch lassen sich Di-Phosphorsäuremonoester oder Poly-Phosphorsäuremonoester verwenden, die vorzugsweise durch die folgende Formel (5) dargestellt werden können:

Y-(O-PO(OH)₂)₁ (5)

Hierin ist 1 eine ganze Zahl von 2 - 5, vorzugsweise 2 oder 3. Falls 1 2 ist, hat Y die gleiche Bedeutung wie X bei den organischen Diphosphonsäuren der Formel (2) definiert. Wenn 1 größer als 2 ist, hat Y die gleichen Bedeutungen wie oben für die Polyphosponsäuren der Formel (3) definiert. Wiederum können die Phosphorsäuremonoestergruppen mit dem gleichen oder unterschiedlichen Kohlenstoffatomen von Y verbunden sein.

Es können auch schwefelhaltige Säuren wie Schwefelsäure, Schweflige Säure, Sulfonsäure, organische Schwefelsäuremonoester mit mindestens zwei Schwefelsäuremonoestergruppen oder organische Sulfonsäuren mit mindestens zwei Sulfonsäureestergruppen verwendet werden.

Die Schwefelsäuremonoester mit mindestens zwei Schwefelsäuremonoestergruppen lassen sich vorzugsweise durch die folgende Formel (6) darstellen:

X"(O-SO₂-OH)ₑ (6)

Hierin stellt e eine ganze Zahl von mindestens 2, vorzugsweise 2-5, und stärker bevorzugt 2 oder 3 dar.

Wenn e 2 ist, hat X" die gleiche Bedeutung wie X im Fall der organischen Diphosphonsäuren der Formel (2). Wenn e größer als 2 ist, hat X" die gleiche Bedeutung wie Y in der Formel (3).

Die Schwefelsäuremonoestergruppen können jeweils unabhängig mit dem gleichen oder mit unterschiedlichen Kohlenstoffatomen von X verbunden sein, wobei auch 2 oder 3 Schwefelsäuremonoestergrupen mit dem gleichen Kohlenstoff verbunden sein können.

Di Sulfonsäuremonoester mit mindestens zwei Sulfonsäuremonoestergruppen lassen sich vorzugsweise durch die folgende Formel (7) darstellen:

X"' (O-SO-OH)_{f} (7)

Hierin stellt f eine ganze Zahl von mindestens 2, vorzugsweise 2-5, und stärker bevorzugt 2 oder 3 dar.

Wenn f 2 ist, hat X"' die gleiche Bedeutung wie X im Fall der organischen Diphosphonsäuren der Formel (2). Wenn f größer als 2 ist, hat X"' die gleiche Bedeutung wie Y in der Formel (3).

Die Sulfonsäuremonoestergruppen können jeweils unabhängig mit dem gleichen oder mit unterschiedlichen Kohlenstoffatomen von X verbunden sein, wobei auch 2 oder 3 Sulfonsäuremonoestergrupen mit dem gleichen Kohlenstoff verbunden sein können.

Eine besonders bevorzugte Säure ist Phosphorsäure.

Neben den oben beschriebenen Kombinationen von mehrwertiger Säure und stickstoffhaltiger Base (i) bzw. eines entsprechenden Salzes (ii) sind auch Betaine (iii), d.h. innere Salze, einsetzbar. Der Begriff "Betain" beschreibt Verbindungen, die innerhalb des Moleküls eine Gruppe mit positiver Ladung (wie z.B. eine Ammonium- oder Pyridiniumgruppe) und eine Gruppe mit negativer Ladung (wie z.B. eine (teilweise) deprotonierte Phosphorsäuremonoestergruppe) umfasst. Solche Verbindungen lassen sich allgemein durch die folgende Formel (8) ausdrücken:

(B)g-Z-(S)ₕ (8)

Hierin stellt B eine stickstoffhaltige basische Gruppe dar, Z stellt eine organische Verknüpfungsgruppe dar, und S stellt eine mehrwertige Säuregruppe dar. g und h bezeichnen die Anzahl dieser Gruppen und werden vorzugsweise so gewählt, dass das Betain ladungsneutral ist. Ansonsten ist das Betain mit der erforderlichen Anzahl positiv oder negativ geladener Gegenionen assoziiert.

Diese Betaine enthalten eine oder mehrere stickstoffhaltige basische Gruppe(n) B (wie z. B. eine primäre, sekundäre oder tertiäre Aminogruppe, eine Iminogruppe, eine Pyridinyl-, Piperidinyl-, Piperazinyl-, Pyrrolidinyl-, Pyrazolyl- oder Morpholinylgruppe), d.h. g ist vorzugsweise 1 - 6, stärker bevorzugt 1 - 4, und am stärksten bevorzugt 1 oder 2). Zumindest eine von diesen liegt in protonierter Form vor, d.h. sie trägt eine positive Ladung.

Auch enthalten diese Betaine im Molekül eine oder mehrere mehrwertige Säuregruppe(n) (wie eine Phosphorsäuremonoestergruppe, eine Phosphonsäuregruppe -, eine Schwefelsäuremonoestergruppe und eine Sulfonsäuremonoestergruppe) innerhalb eines Moleküls, d.h. h ist vorzugsweise 1 - 6, stärker bevorzugt 1 - 4, und am stärksten bevorzugt 1 oder 2. Zumindest eine der mehrwertigen Säuregruppen liegt in (teilweise) dissoziierter Form vor, d.h. sie trägt eine negative Ladung. Diese sind über eine organische Verknüpfungsgruppe Z miteinander verbunden sind. Der Ausdruck "mehrwertige Säuregruppe" umfasst im Falle eines Betains auch solche Gruppen, die in ihrer teilweise oder vollständig deprotonierten Form vorliegen und in dieser Form nicht notwendigerweise mehrere Protonen aufweisen (z.B. eine -O-P(OH)(O)- Gruppe).

Die organische Verknüpfungsgruppe Z ist nicht besonders beschränkt, umfasst jedoch vorzugsweise 1 - 45, stärker bevorzugt 4 - 30, weiterhin stärker bevorzugt 5 - 22 und am stärksten bevorzugt 6 - 18 Kohlenstoffatome. Die Verknüpfungsgruppe kann eine geradkettige oder verzweigte Alkyl-, Alkenyl-, oder Alkinylgruppe sein, die wiederum mit einer oder mehreren Alkyl-, Alkenyl-, Alkinyl-, Cycloalkyl-, Cycloalkylen-, Heterocycloalkyl-, Aryl- oder Heteroarylgruppe(n) substituiert sein kann. Ferner kann die organische Verknüpfungsgruppe selbst eine Cycloalkyl-, Cycloalkylen-, Heterocycloalkyl-, Aryl- oder Heteroarylgruppe sein, die wiederum mit einer oder mehreren Alkyl-, Alkenyl-, Alkinyl-, Cycloalkyl-, Cycloalkylen-, Heterocycloalkyl-, Aryl- oder Heteroarylgruppe(n) substituiert sein kann. Auch können die Base- und Säuregruppen innerhalb des Moleküls über Heteroatome (wie z.B. über eine Ether- oder Sulfidbindung) verbunden sein, und die Verknüpfungsgruppe kann einen oder mehrere Substituenten (wie F, Cl, Br, I, Cyano, Carboxy oder Hydroxy) aufweisen.

Das Mengenverhältnis der stickstoffhaltigen Base(n) zu der oder den mehrwertigen Säure(n) in der Base/Säure-Kombination (i), oder (ii) ist nicht besonders beschränkt. Erfindungsgemäß ist es jedoch bevorzugt, dass das Mengenverhältnis dergestalt ist, dass ein Salz der stickstoffhaltigen Base(n) und der mehrwertigen Säure(n) gebildet werden kann. Das molare Verhältnis Base/Säure ist daher vorzugsweise größer als 0,8 und stärker bevorzugt größer als 0,95. Selbst ein größerer Überschuss an Base stört die Oberflächenbehandlung nicht, kann jedoch bei einigen Lösungsmitteln zu Löslichkeitsproblemen führen. Das molare Base/Säure Verhältnis sollte daher vorzugsweise im Bereich von 1 - 6, stärker bevorzugt 1 - 4 und weiter stärker bevorzugt 1,2 - 2,5 liegen. Ein Verhältnis im Bereich von 1,2 - 2 ist weiterhin stärker bevorzugt.

Auch die Menge der verwendeten Base/Säure-Kombination ist nicht besonders beschränkt. Da die zur Oberflächenmodifizierung benötigte Menge von schwer zu bestimmenden Faktoren, wie z.B. der Oberfläche der Nanopartikel oder dem Grad der Oberflächenbedeckung von bereits vorhandenen dispersionsvermittelnden Molekülen auf der Oberfläche der Nanopartikel abhängt, ist es schwierig, die benötigte Menge an Base/Säure-Kombination allgemeingültig anzugeben. Ein Überschuss der Base/Säure-Kombination stört die Oberflächenmodifikation jedoch nicht. Man sollte daher im Zweifelsfall einen Überschuss an Base/Säure-Kombination einsetzen. Aus ökonomischen Gründen ist es jedoch wünschenswert, die einzusetzende Menge der Base/Säure-Kombination so gering wie möglich zu halten. Als Anhaltspunkt zur Bestimmung der Mindestmenge an Base/Säure-Kombination kann die zur Erzeugung einer Monolage von Base/Säure auf der Oberfläche der Nanopartikel benötigte Menge angegeben werden. Im Allgemeinen ist es ausreichend, zumindest 2 ml einer 1 mol/l Lösung an Base bzw. Säure (d.h. mindestens 2*10⁻³ mol an Base und 2*10⁻³ mol an Säure) pro 1 g Nanopartikel einzusetzen, wobei das Gesamtvolumen vorzugsweise etwa zwischen 5 - 25 ml beträgt (d.h. 3 - 23 ml Lösungsmittel und 2 ml der 1 mol/l Lösung an Base bzw. Säure pro 1 g Nanopartikel). Die Verwendung eines Lösungsmittels ist jedoch nicht zwingend notwendig, wenn die Base/Säure-Kombination selbst unter den Behandlungsbedingungen flüssig ist.

Unter den stickstoffhaltigen Basen, insbesondere den aliphatischen, alicyclischen und aromatischen Basen, und den mehrwertigen Säuren wählt man vorzugsweise solche aus, die während der Oberflächenbehandlung ein Salz bilden. Das heißt, die Basiszität zumindest einer der verwendeten Basen sollte höher sein als die Acidität der ersten Dissoziationsstufe zumindest einer der verwendeten mehrwertigen Säuren (pK_{B} (Base) ≤ pK_{S1} (Säure)). Dies ist insbesondere dann von Vorteil, wenn die freie Säure bzw. Base in dem verwendeten Lösungsmittel im wesentlichen unlöslich ist, da hierdurch in einigen Fällen die Löslichkeit der Base/Säure-Kombination erhöht werden kann.

Die Reihenfolge der Zugabe der einzelnen Bestandteile unterliegt keinen besonderen Beschränkungen. Das heißt, Base, Säure, Nanopartikel und ggf. das Lösungsmittel können in beliebiger Reihenfolge zugegeben werden. Es ist jedoch bevorzugt, die Nanopartikel in einem Lösungsmittel vorzulegen, und hierzu dann die Base/Säure-Kombination ((i) (ii) oder (iii)), ggf. in einem Lösungsmittel, zuzugeben. Selbstverständlich können auch die Nanopartikel (ggf. in einem Lösungsmittel) zu der Base/Säure-Kombination (ggf. in einem Lösungsmittel) zugegeben werden. Vorzugsweise werden somit Base und Säure bzw. deren Salz zusammen (ggf. in einem Lösungsmittel), und nicht sukzessive, mit den Nanopartikeln (ggf. in einem Lösungsmittel) vereinigt.

In dem Fall der Variante (ii), d.h. in dem Fall, dass die Base/Säure-Kombination als Salz zugegeben wird, kann auch vor der Vereinigung mit den Nanopartikeln das Salz separat hergestellt und isoliert werden, beispielsweise durch Entfernen des Lösungsmittels oder fraktionierte Kristallisation. Der Begriff "Salz", wie er hierin verwendet wird, umfasst sowohl Salze von mehrwertiger Säure und Base im Verhältnis 1:1, d.h. dass nur ein Proton der mehrwertigen Säure von der Base abstrahiert wird, als auch Salze im Verhältnis Base/Säure von 2:1 bzw. je nach Anzahl der Protonen der mehrwertigen Säure auch 3:1, 4:1, 5:1 usw. Ein Beispiel eines Salzes im Verhältnis 1:1 ist (N(n-C₆H₁₃)₃H)+(H₂PO₄)⁻. Ein Beispiel eines Salzes im Verhältnis 1:2 ist [(N(*n*-C₆H₁₃)₃H)]⁺₂(HPO4)²⁻. In dem Fall, dass die stickstoffhaltige Base mehr als ein basisches Stickstoffatom enthält, können auch Salze im Verhältnis Säure/Base von 1:2 2:2, 2:3, usw. gebildet werden. Im Übrigen gilt das für Variante (i) gesagte entsprechend für Variante (ii) und (iii), soweit dies der erforderlichen Salzbildung nicht widerspricht.

Das erfindungsgemäße Oberflächenbehandlungsverfahren wird vorzugsweise in einem Lösungsmittel durchgeführt. Wie auch die Menge der Base/Säure-Kombination ist auch die Menge des Lösungsmittels nicht besonders beschränkt. Falls die Base/Säure-Kombination eine Flüssigkeit ist (z.B. im Fall eines großen Überschusses an Säure bzw. Base, und vorausgesetzt, dass die im Überschuss vorhandene Komponente unter Behandlungsbedingungen eine Flüssigkeit ist), kann auch kein Lösungsmittel verwendet werden. Im Allgemeinen wird ein Lösungsmittel in solch einer Menge verwendet, dass die in dem erfindungsgemäßen Oberflächenbehandlungsverfahren verwendete Flüssigkeit eine Konzentration an Base bzw. Säure von je 0,005 - 1 mol/1, vorzugsweise 0,01 - 0,8 mol/1, stärker bevorzugt 0,1 - 0,5 mol/l aufweist.

Weiterhin ist auch die Art des Lösungsmittels nicht besonders beschränkt. Allgemein verwendete organische Lösungsmittel können verwendet werden. Beispiele beinhalten aromatische Kohlenwasserstoffe wie Benzol, Toluol und Xylol, halogenierte Lösungsmittel wie Chloroform, Dichlormethan, Tetrachlorethan und Tetrachlorkohlenstoff, Ether wie Dimethylether, Diethylether, Diisopropylether, Diphenylether und Tetrahydrofuran (THF), Ketone wie Methylethylketon (MEK) und Diethylketon, Alkohole wie Methanol, Ethanol, Propanol und iso-Propanol, Ester wie Butylacetat und Ethylacetat, und auch sonst übliche Lösungsmittel wie z.B. Acetonitril. Diese Lösungsmittel können allein oder in Mischung von 2 oder mehr Lösungsmitteln verwendet werden. Hierbei können protische und aprotische Lösungsmittel verwendet werden, wobei aprotische Lösungsmittel bevorzugt sind. Bevorzugte Lösungsmittel haben bei Normaldruck einen Siedepunkt von 30 bis 180 °C, stärker bevorzugt von 60 bis 160 °C, weiterhin stärker bevorzugt von 90 bis 150 °C.

Vorzugsweise ist das in dem erfindungsgemäßen Oberflächenbehandlungsverfahren verwendete Lösungsmittel das Lösungsmittel, das in der Endanwendung der Nanopartikeldispersion verwendet werden soll, oder es ist diesem bezüglich der Polarität ähnlich. Hierdurch kann sichergestellt werden, dass eine gute Re-dispergierung in der Endanwendung erreicht wird.

Wie bereits oben beschrieben, wird das erfindungsgemäße Oberflächenbehandlungsverfahren für Nanopartikel durch Behandlung der Nanopartikel mit einer Kombination einer stickstoffhaltigen Base und einer mehrwertigen Säure, vorzugsweise in einem Lösungsmittel, durchgeführt. Bezüglich der Bedingungen während der Behandlung bestehen keine ausdrücklichen Beschränkungen, jedoch ist es vorteilhaft, die Behandlung bei einer Temperatur im Bereich von Raumtemperatur bis zum Siedepunkt des ggf. verwendeten Lösungsmittels bei Normaldruck durchzuführen. Um die Reaktionsgeschwindigkeit zu erhöhen, wird dass erfindungsgemäße Verfahren zur Oberflächenbehandlung von Nanopartikeln vorzugsweise bei einer Temperatur oberhalb von Raumtemperatur, vorzugsweise im Bereich von 30 - 100 °C, stärker bevorzugt im Bereich von 60 - 90 °C durchgeführt.

Falls ein oder mehrere hochsiedende (Siedepunkt bei Normaldruck höher 100 °C) Lösungsmittel verwendet werden, kann es vorteilhaft sein, die Behandlung bei reduziertem Druck und erhöhter Temperatur durchzuführen. In diesem Fall kann das Lösungsmittel direkt nach der Behandlung mit der Base/Säure-Kombination bei reduziertem Druck verdampft werden, um so die erfindungsgemäß behandelten Nanopartikel zu isolieren. Die Abtrennung der behandelten Nanopartikel von der Behandlungslösung kann jedoch auch durch andere, dem Fachmann bekannte Verfahren, wie z.B. Ultrafiltration oder Zentrifugation durchgeführt werden.

Es ist auch bevorzugt, dass die in dem erfindungsgemäßen Verfahren verwendete Flüssigkeit bzw. Dispersion (Nanopartikel, Base/Säure-Kombination und ggf. Lösungsmittel) im wesentlichen frei von gelösten Metallionen ist, d.h. die Konzentration an gelösten Metallionen beträgt vorzugsweise weniger als 0,01 mol/l, stärker bevorzugt weniger als 0,001 mol/l.

Das erfindungsgemäße Oberflächenbehandlungsverfahren ist auf jegliche anorganische Nanopartikel anwendbar, die eine reduzierte Dispersionsfähigkeit nach ihrer Synthese und Isolierung aufweisen. Vorzugsweise sind dies anorganische Metallsalz-Nanopartikel, die eine vollständig oder hauptsächlich kristalline Struktur aufweisen. Die Nanopartikel können dotiert sein und insbesondere phosphoreszieren oder fluoreszieren.

Die Nanopartikel werden vorzugsweise aus der Gruppe der Phosphate, Halophospohate, Arsenate, Sulfate, Borate, Aluminate, Gallate, Silikate, Germanate, Oxide, Vanadate, Niobate, Tantalate, Wolframate, Molybdate, Alkalihalogenate, Halogenide (z.B. Fluoride, Chloride, Jodide), Nitride, Sulfide, Selenide, Sulfoselenide, sowie Oxysulfide ausgewählt.

Das erfindungsgemäße Verfahren kann somit auf phosphathaltige und nicht-phosphathaltige Nanopartikeln angewandt werden. Das erfindungsgemäße Verfahren ist ferner auf halbleitende als auch vorzugsweise auf nicht-halbleitende Nanopartikel anwendbar, wobei man letztere unter den oben angeführten Stoffklassen auswählen kann.

Bevorzugtermaßen wird das erfindungsgemäße Verfahren auf die folgenden Nanopartikel angewendet:
1) Hydrothermal synthetisierte Nanopartikel
2) Dotierte oder nicht dotierte Nanopartikel gemäß der Lehre der WO 02/20696 A1, die man unter den zuvor angegebenen Stoffklassen auswählt. Diese sind nach einem Verfahren erhältlich, in dem man Anionen- und Kationenquelle unter Erhitzen in einer Synthesemischung reagieren lässt, die eine das Kristallwachstum der Nanopartikel steuernde Komponente aufweist, insbesondere eine phosphororganische Verbindung (z.B. jene, die in Anspruch 3 der WO-Schrift offenbart sind) oder ein Monoalkylamin, insbesondere Dodecylamin, oder ein Dialkylamin, insbesondere Bis-(ethylhexyl)-amin, und ggf. ein weiteres Lösungsmittel enthält. Nanopartikel, die dem erfindungsgemäßen Oberflächenbehandlungsverfahren unterzogen werden können, werden in den Beispielen der WO 02/20696 A1 und den Ansprüchen 32 bis 34 dieser Schrift offenbart.
3) Nanopartikel gemäß der Lehre der WO 2004/046035 mit einem Kristallgitter oder im Falle einer Dotierung einem Wirtsgitter bestehend im Wesentlichen aus Z-Sulfat (Z = Magnesium, Kalzium, Strontium oder Barium), erhältlich durch gesteuertes Kristallwachstum in einem nicht-wässrigen Lösungsmittel mit koordinierenden Eigenschaften, insbesondere in einem Polyol oder DMSO, wobei die Nanopartikel eine mittlere Teilchengröße von 1 bis 50 nm besitzen und die Eigenschaft aufweisen, dass sie in Wasser dispergierbar sind.
4) Nanopartikel gemäß der Lehre der WO 2005/105933, die durch ein Verfahren zur Herstellung ggf. dotierter nanopartikulärer Metallsulfat-Nanopartikel erhältlich sind, worin das Metall unter polyvalenten und monovalenten Übergangsmetallen ausgewählt wird und das Verfahren zumindest die folgenden Schritte umfasst:
   a) Erwärmen einer Reaktionsmischung, umfassend
      - ein polares organisches Lösungsmittel, das wenigstens zwei Hydroxylgruppen umfasst, oder ein polares Lösungsmitel, das wenigstens eine Sulfoxidgruppe umfasst,
      - eine Quelle eines polyvalenten Metalls oder monovalenten Übergangsmetalls, eine Sulfatquelle, und ggf. eine Dotanden-Metallquelle, und
      - eine Base, die unter
         o Basen mit einem aromatischen stickstoffhaltigen Heterozyklus außer Imidazol,
         o Basen mit einem aliphatischen stickstoffhaltigen Heterozyklus,
         o aliphatischen hydroxyl-substituierten Aminen,
         o aliphatischen Polyaminen,
         o aromatischen Aminen,
         o Ammoniak und Ammoniak freisetzende Verbindungen, und
         o Metallhydroxiden
         ausgewählt wird.
5) Nanopartikel gemäß der W02004/096714, die durch ein Verfahren zur Herstellung von Nanopartikeln, die ein Metal(III)-Vanadat umfassen, erhältlich sind, wobei das Verfahren eine Reaktion einer reaktiven, in einem Reaktionsmedium löslichen oder dispergierbaren Vanadatquelle in einem Reaktionsmedium mit einem in dem Reaktionsmedium löslichen oder dispergierbaren reaktiven Metall(III)Salz unter Erwärmen umfasst, dadurch gekennzeichnet, dass das Reaktionsmedium Wasser und wenigstens ein Polyol in einem Volumenverhältnis von 20/80 bis 90/10 enthält.
6) Nanopartikel mit einer Größe von vorzugsweise weniger als 25 nm, die vollständig oder im Wesentlichen aus titanhaltigen Oxidpartikeln bestehen, die durch ein Verfahren erhältlich sind, dass die Reaktion einer hydrolysierbaren halogenidhaltigen Titanverbindung mit Wasser in einer Reaktionsmischung umfasst, die wenigstens ein Polyol enthält. Dieses Verfahren ist in der gleichzeitig anhängigen PCT Anmeldung PCT/EP2004/012376 beschrieben.
7) Lumineszierende Nanopartikel gemäß der EP 1 473 347 A1, die einen Kern aus einem ersten Metallsalz oder -oxid und eine Schale aus einem zweiten Metallsalz oder -oxid umfassen, und die nicht-halbleitende Eigenschaften aufweisen, wobei vorzugsweise das Salz des Kerns und der Schale dasselbe Anion aufweisen, das vorzugsweise unter Phosphat, Sulfat oder Fluorid ausgewählt wird.
8) Lumineszierende Nanopartikel gemäß der EP 1 473 348 A1, die einen Kern aus einem luminszierenden Metallsalz, das unter Phosphaten, Sulfaten oder Fluoriden ausgewählt wird, und eine Schale aus einem Metallsalz oder -oxid, das in der Lage ist, den Energietransfer von dem Kern nach seiner elektronischen Anregung an die Oberfläche der Nanopartikel zu unterbinden oder zu reduzieren, umfassen.

Überraschenderweise wurde erfindungsgemäß gefunden, dass keine besondere Abstimmung zwischen der einzusetzenden Base/Säure-Kombination und der chemischen Zusammensetzung der Nanopartikel erforderlich ist. In einer Ausführungsform der Erfindung wird jedoch für die Base/Säure-Kombination eine mehrwertige Säure verwendet, die dem Anion entspricht, welches die zu behandelnden Nanopartikel aufbaut (bei Kern/Schale-Partikeln das die Schale aufbauende Anion). Es wird angenommen, dass hierdurch eine besonders gute Affinität der Base/Säure-Kombination zu der Oberfläche der Nanopartikel erreicht werden kann. Beispielsweise kann im Falle der Oberflächenbehandlung von Nanopartikeln, die auf ihrer Oberfläche Phosphatgruppen aufweisen, als mehrbasige Säure für die Base/Säure-Kombination Phosphorsäure eingesetzt werden. Entsprechend kann bei Nanopartikeln, die durch Einsatz von Boraten hergestellt wurden, Borsäure verwendet werden. Analog kann im Fall der Verwendung von Metallsulfaten bei der Nanopartikelsynthese im erfindungsgemäßen Oberflächenbehandlungsverfahren Schwefelsäure verwendet werden.

In einer anderen Ausführungsform enthält die verwendete Säure/Base Kombination keinerlei Bestandteile (mehrbasige Säure, Anionen dieser mehrbasigen Säure und/oder stickstoffhaltige Base), die bei der Synthese der Nanopartikel verwendet wurden. In diesem Fall wird beispielsweise im Falle von Sulfat-Nanopartikeln eine Base/Säure-Kombination eingesetzt, die keine Schwefelsäure oder Sulfationen enthält (Beispiel: Einsatz von Phosphorsäure als mehrbasige Säure). Analog kann z.B. bei Phosphat-Nanopartikeln eine Base/Säure-Kombination verwendet werden, die keine Phosphorsäure oder Phosphat enthält (Beispiel: Verwendung von Schwefelsäure als mehrwertige Säure).

Im übrigen wird das erfindungsgemäße Oberflächenbehandlungsverfahrne unter Bedingungen durchgeführt, die kein Partikelwachstum erlauben. Vorzugsweise sind daher bei der Behandlung der Nanopartikel im wesentlichen keine (insbesondere gelöste) Metallionen vorhanden, insbesondere keine, die auch in den Nanopartikeln (als Kationen) vorhanden sind.

Im folgenden wird das erfindungsgemäße Oberflächenbehandlungsverfahren durch Beispiele veranschaulicht. Diese Beispiele sollten jedoch nicht so ausgelegt werden, dass sie den Umfang der Erfindung beschränken.

### BEISPIELE

### Lösung A:

9,8 g (100 mmol) wasserfreie Phosphorsaure H₃PO₄ werden zu 40 ml Diphenylether gegeben und mit 50 ml (150 mmol) Trihexylamin versetzt. Die Mischung wird am Rotationsverdampfer evakuiert und langsam bis auf 80°C erhitzt. Sobald eine klare Lösung erhalten wird, die kein Wasser mehr abgibt, wird das Erhitzen gestoppt. Nach dem Abkühlen wird die Lösung mit Diphenylether auf 100 ml aufgefüllt und in einem verschlossenen Gefäß aufbewahrt.

### Lösung B:

9,8 g (100 mmol) wasserfreie Phosphorsaure H₃PO₄ werden zu 80 ml Diphenylether gegeben und mit 95 ml (150 mmol) Tridodecylamin versetzt. Die Mischung wird am Rotationsverdampfer evakuiert und langsam bis auf 80°C erhitzt. Sobald eine klare Lösung erhalten wird, die kein Wasser mehr abgibt, wird das Erhitzen gestoppt. Nach dem Abkühlen wird die Lösung mit Diphenylether auf 200 ml aufgefüllt und in einem verschlossenen Gefäß aufbewahrt.

### Lösung C:

8,9 g (50 mmol) wasserfreie Pyrophosphorsaure H₄P₂O₇ werden zu 40 ml Diphenylether gegeben und mit 50 ml (150 mmol) Trihexylamin versetzt. Die Mischung wird am Rotationsverdampfer evakuiert und langsam bis auf 80 °C erhitzt. Sobald eine klare Lösung erhalten wird, die kein Wasser mehr abgibt, wird das Erhitzen gestoppt. Nach dem Abkühlen wird die Lösung mit Diphenylether auf 100 ml aufgefüllt und in einem verschlossenen Gefäß aufbewahrt.

### Lösung D:

15,8 g (100 mmol) wasserfreie Phenylphosphonsaure C₆H₇PO₃ werden zu 40 ml Diphenylether gegeben und mit 50 ml (150 mmol) Trihexylamin versetzt. Die Mischung wird am Rotationsverdampfer evakuiert und langsam bis auf 80°C erhitzt. Sobald eine klare Lösung erhalten wird, die kein Wasser mehr abgibt, wird das Erhitzen gestoppt. Nach dem Abkühlen wird die Lösung mit Diphenylether auf 100 ml aufgefüllt und in einem verschlossenen Gefäß aufbewahrt.

### Lösung E:

Eine wässrige Lösung mit 10,3 g (50 mmol) 1-Hydroxyethan-1,1-diphosphonsaure C₂H₈P₂O₇ wird zu 40 ml Diphenylether gegeben und mit 50 ml (150 mmol) Trihexylamin versetzt. Die Mischung wird am Rotationsverdampfer evakuiert und zunächst auf 50°C erhitzt, bis der größte Teil des Wassers abdestilliert ist, Anschließend wird langsam bis auf 80°C erhitzt. Sobald eine klare Lösung erhalten wird, die kein Wasser mehr abgibt, wird das Erhitzen gestoppt. Nach dem Abkühlen wird die Lösung mit Diphenylether auf 100 ml aufgefüllt und in einem verschlossenen Gefäß aufbewahrt.

### Lösung F:

15 g (50 mmol) wasserfreie Amino-tri-(methylenphosphonsaure) C₃H₁₂P₃NO₉ werden zu 30 ml Diphenylether gegeben und mit 50 ml (150 mmol) Trihexylamin versetzt. Die Mischung wird am Rotationsverdampfer evakuiert und langsam bis auf 80°C erhitzt. Sobald eine klare Lösung erhalten wird, die kein Wasser mehr abgibt, wird das Erhitzen gestoppt. Nach dem Abkühlen wird die Lösung mit Diphenylether auf 100 ml aufgefüllt und in einem verschlossenen Gefäß aufbewahrt.

### Lösung G:

22 g (50 mmol) wasserfreie Ethylendiamin-tetra-(methylphosphonsaure) C₆H₂₀P₄N₂O₁₂ werden zu 80 ml Diphenylether gegeben und mit 67 ml (200 mmol) Trihexylamin versetzt. Die Mischung wird am Rotationsverdampfer evakuiert und langsam bis auf 80°C erhitzt. Sobald eine klare Lösung erhalten wird, die kein Wasser mehr abgibt, wird das Erhitzen gestoppt. Nach dem Abkühlen wird die Lösung mit Diphenylether auf 200 ml aufgefüllt und in einem verschlossenen Gefäß aufbewahrt.

### Lösung H:

14 g (50 mmol) Benzol-1,3-disulfonsaure Dinatriumsalz C₆H₄S₂O₆Na₂ werden in 100 ml Wasser gelöst und langsam durch eine mit Dowex 50 (H-Form) gefüllte Ionenaustauschersäule gegeben. Die so erhaltene Lösung von freier Benzol-1,3-disulfonsäure wird mit 50 ml Diphenylether und 33 ml (100 mmol) Trihexylamin versetzt. Die Mischung wird am Rotationsverdampfer evakuiert und zunächst auf 50°C erhitzt, bis der größte Teil des Wassers abdestilliert ist. Anschließend wird langsam bis auf 80°C erhitzt. Sobald eine klare Lösung erhalten wird, die kein Wasser mehr abgibt, wird das Erhitzen gestoppt. Nach dem Abkühlen wird die Lösung mit Diphenylether auf 100 ml aufgefüllt und in einem verschlossenen Gefäß aufbewahrt.

### 1) LaPO₄:Eu-Nanopartikel

1,0 g LaPO₄:Eu Nanopartikel, die durch ein in der WO 02/20696 A1 beschriebenes Verfahren hergestellt wurden, werden mit 20 ml Diphenylether und 2 ml Lösung A versetzt und bei 20 mbar auf 80°C erhitzt, bis eine klare Lösung entstanden ist.

### 2) CePO₄:Tb-Nanopartikel

1,0 g CePO₄:Tb Nanopartikel, die durch ein in der WO 02/20696 A1 beschriebenes Verfahren hergestellt wurden, werden mit 20 ml Diphenylether und 4 ml Lösung B versetzt und bei 20 mbar auf 80°C erhitzt, bis eine klare Lösung entstanden ist.

### 3) LaPO₄-Ce,Tb/LaPO₄-Kern/Schale-Nanopartikel

1,0 g LaPO₄:Ce,Tb/LaPO₄-Kern/Schale-Nanopartikel, die durch ein in "K. Kömpe. H. Borchert, J. Storz, A. Lobo, S. Adams, T. Möller, M. Haase (2003) Green-Emitting CePO4:Tb/LaPO4 Core/Shell Nanoparticles with 70% Photoluminescence Quantum Yield. Angew. Chem. Int. Ed. 42: 5513; Angew. Chem. 115: 5672)" beschriebenes Verfahren hergestellt wurden, werden mit 20 ml Diphenylether und 2 ml Lösung A versetzt und bei 20 mbar auf 80°C erhitzt, bis eine klare Lösung entstanden ist.

### 4) LaPO₄:Ce.Tb/LaPO₄-Kern/Schale-Nanopartikel

1,0 g LaPO₄:Ce,Tb/LaPO₄-Kern/Schale-Nanopartikel, die durch ein in "K. Kömpe. H. Borchert, J. Storz, A. Lobo, S. Adams, T. Möller, M. Haase (2003) Green-Emitting CePO4:Tb/LaPO4 Core/Shell Nanoparticles with 70% Photoluminescence Quantum Yield. Angew. Chem. Int. Ed. 42: 5513; Angew. Chem. 115:5672)" beschriebenes Verfahren hergestellt wurden, werden mit 20 ml Diphenylether und 2 ml Lösung C versetzt und bei 20 mbar auf 80°C erhitzt, bis eine klare Lösung entstanden ist.

### 5) LaPO₄:Ce,Tb/LaPO₄-Kern/Schale-Nanopartikel

1,0 g LaPO₄:Ce,Tb/LaPO₄-Kern/Schale-Nanopartikel, die durch ein in "K. Kömpe. H, Borchert, J. Storz, A. Lobo, S. Adams, T. Möller, M. Haase (2003) Green-Emitting CePO4:Tb/LaPO4 Core/Shell Nanopartieles with 70% Photoluminescence Quantum Yield. Angew. Chem. Int. Ed. 42: 5513; Angew. Chem. 115: 5672)" beschriebenes Verfahren hergestellt wurden, werden mit 20 ml Diphenylether und 2 ml Lösung D versetzt und bei 20 mbar auf 80 °C erhitzt, bis eine klare Lösung entstanden ist.

### 6) LaPO₄:Ce,Nd/ LaPO₄-Kern/Schale-Nanopartikel

1,0 g LaPO₄:Ce,Nd/ LaPO₄-Kern/Schale-Nanopartikel die durch ein in "K. Kömpe. H. Borchert, J. Storz, A. Lobo, S. Adams, T. Möller, M. Haase (2003) Green-Emitting CePO4:Tb/LaPO4 Core/Shell Nanoparticles with 70% Photoluminescence Quantum Yield. Angew. Chem. Int. Ed. 42: 5513; Angew. Chem. 115: 5672)" beschriebenes Verfahren hergestellt wurden, werden mit 19 ml Chloroform und 1 ml Lösung A versetzt und über Nacht gerührt, bis eine klare Lösung entstanden ist.

### 7) YVO₄:Eu-Nanonartikel

0,75 g YVO₄:Eu-Nanopartikel, die durch ein in der WO2004/096714 beschriebenes Verfahren hergestellt wurden, werden mit 20 ml Diphenylether und 2 ml Lösung A versetzt und bei 20 mbar auf 80°C erhitzt, bis eine klare Lösung entstanden ist.

### 8) GdP₁₋ₓVₓO₄:Eu-Nanopartikel

0,75 g GdP₁₋ₓVₓO₄:Eu-Nanopartikel, die durch ein in WO2004/096714 beschriebenes Verfahren hergestellt wurden, werden mit 20 ml Diphenylether und 2 ml Lösung A versetzt und bei 20 mbar auf 80°C erhitzt, bis eine klare Lösung entstanden ist.

### 9) YP₁₋ₓVₓO₄:Eu-Nanopartikel

0,75 g YP₁₋ₓVₓO₄:Eu-Nanopartikel, die durch ein in W02004/096714 beschriebenes Verfahren hergestellt wurden, werden mit 20 ml Diphenylether und 2 ml Lösung B versetzt und bei 20 mbar auf 80°C erhitzt, bis eine klare Lösung entstanden ist.

### 10) NaYF₄:Yb,Er-Nanopartikel

1,0 g NaYF₄:Yb,Er-Nanopartikel, die durch ein in PCT/DE2000/003130 beschriebenes Verfahren hergestellt wurden, werden mit 20 ml Diphenylether und 2 ml Lösung C versetzt und bei 20 mbar auf 80°C erhitzt, bis eine klare Lösung entstanden ist.

### 11) TiO₂-Nanopartikel in Butylacetat

1,0 g TiO₂-Nanopartikel die durch ein Verfahren gemäß PCT/EP2004/012376 hergestellt wurden, werden mit 50 ml Methanol und 3 ml Lösung A versetzt und unter Normaldruck auf 60°C erhitzt, bis eine klare Lösung entstanden ist. Die Lösung wird mit 50 ml Butylacetat vermischt und das Methanol vorsichtig abdestilliert.

## Patentansprüche

1. Oberflächenbehandlungsverfahren zur Verbesserung der Dispersionsfähigkeit von Nanopartikeln, die nach dem Syntheseschritt isoliert wurden und gegebenenfalls nach der Isolierung einem oder mehreren Waschschritten unterzogen wurden, wobei das Verfahren eine Behandlung der Nanopartikel mit
(i) einer oder mehreren organischen stickstoffhaltigen Base(n) und einer oder mehreren mehrwertigen Säure(n), oder
(ii) einem Salz aus einer oder mehreren organischen stickstoffhaltigen Base(n) und einer oder mehreren mehrwertigen Säure(n), oder
(iii) einem Betain, das innerhalb des Moleküls eine oder mehrere stickstoffhaltige basische Gruppe(n) und eine oder mehrere mehrwertige Säuregruppe(n) enthält, umfasst.

2. Oberflächenbehandlungsverfahren gemäß Anspruch 1, worin bei der Behandlung mit (i) der Base und der Säure oder mit (ii) dem Salz hiervon oder (iii) dem Betain ein Lösungsmittel verwendet wird.

3. Oberflächenbehandlungsverfahren gemäß Anspruch 1 oder 2, worin die Behandlungtemperatur im Bereich von 30 - 100 °C liegt.

4. Oberflächenbehandlungsverfahren gemäß einem der Ansprüche 1 - 3, worin das molare Verhältnis von Base zu Säure (Base/Säure) im Fall (i) oder (ii) bzw. basische Gruppe/mehrwertige Säuregruppe im Fall (iii) im Bereich von 1 - 5 ist.

5. Oberflächenbehandlungsverfahren gemäß einem der Ansprüche 1 - 4, worin das molare Verhältnis von Base zu Säure (Base/Säure) im Fall (i) oder (ii) bzw. basische Gruppe/mehrwertige Säuregruppe im Fall (iii) im Bereich von 1 - 2 ist.

6. Oberflächenbehandlungsverfahren gemäß einem der Ansprüche 1 - 5, Fall (i) oder (ii), worin die stickstoffhaltige Base von 2 - 30 Kohlenstoffatomen enthält.

7. Oberflächenbehandlungsverfahren gemäß Anspruch 6, Fall (i) oder (ii), worin die Base ein primäres, sekundäres oder tertiäres Amin gemäß den Formeln NH₂R, NHRR' bzw. NRR'R" ist, worin R, R' und R" organische Kohlenwasserstoffreste bezeichnen, die ggf. substituiert sein können und die jeweils von 3 - 14 Kohlenstoffatome enthalten.

8. Oberflächenbehandlungsverfahren gemäß einem der Ansprüche 1 - 6, Fall (i) oder (ii), worin die Base eine aromatische stickstoffhaltige Base mit 3 - 30 Kohlenstoffatomen ist.

9. Oberflächenbehandlungsverfahren gemäß einem der Ansprüche 1 - 6, Fall (i) oder (ii), worin die Base eine alicyclische stickstoffhaltige Base mit 2 - 30 Kohlenstoffatomen ist.

10. Oberflächenbehandlungsverfahren gemäß einem der Ansprüche 1 - 9, worin die mehrwertige Säure im Fall (i) oder (ii) oder die mehrwertige Säuregruppe im Fall (iii) unter phosphor- und schwefelhaltigen Säuren bzw. Säuregruppen ausgewählt wird.

11. Oberflächenbehandlungsverfahren gemäß Anspruch 10, Fall (i) oder (ii), worin die Säure unter Phosphorsäure, Di-Phosphorsäure, Poly-Phosphorsäuren, organischen Phosphonsäuren, organischen Di-Phosphonsäuren, organischen Poly-Phosphonsäuren, Phosphorsäuremonoester, Phosphonsäuremonoester mit mindestens zwei Phosphosäureestergruppen, Schwefelsäure, Schwefliger Säure, Sulfonsäure, Schwefelsäuremonoester mit mindestens zwei Schwefelsäuremonoestergruppen und Sulfonsäuremonoester mit mindestens zwei Sulfonsäuremonoestergruppen ausgewählt wird

12. Oberflächenbehandlungsverfahren gemäß Anspruch 11 oder 10, Fall (i) oder (ii), worin die mehrwertige Säure eine oder mehrere organische Gruppe(n) enthält, die ggf. eine oder mehr Hydroxy-, Amin-, oder Carbonsäure- oder Cyanofunktion (en) enthält

13. Oberflächenbehandlungsverfahren gemäß einem der Ansprüche 1 - 12, worin zumindest eine der verwendeten Base(n) im Fall (i) oder (ii) bzw. eine der vorhandenen stickstoffhaltigen basischen Gruppen im Fall (iii) eine Basizität besitzt, um von zumindest einer der verwendeten Säure(n) ein Proton zu abstrahieren (pK_{B} (Base) ≤ pK_{S1} (Säure)).

14. Oberflächenbehandlungsverfahren gemäß einem der Ansprüche 1 - 13, worin bei der Behandlung im Wesentlichen keine Metallionen vorhanden sind.

15. Nanopartikel, erhältlich durch ein Oberflächenbehandlungsverfahren gemäß einem der Ansprüche 1 - 14.

16. Nanopartikeldispersion, umfassend ein Lösungsmittel und Nanopartikel gemäß Anspruch 15.

17. Verwendung von Nanopartikeln gemäß Anspruch 15 oder einer Nanopartikeldispersion gemäß Anspruch 16 bei der Herstellung von Tinten, einschließlich Sicherheitsdrucktinten, bei der Oberflächenmodifizierung von metallischen oder nichtmetallischen Substraten, als phosphoreszierende oder fluoreszierende Materialien, als Markierung biologischer Moleküle, als Polymerfüllstoff oder als Röntgenkontrastmittel.

## Claims

1. Surface treatment method for improving the dispersibility of nanoparticles which have been isolated after the synthesis step and optionally have been subjected after isolation to one or more washing steps, wherein the method comprises treatment of the nanoparticles with
(i) one or more organic nitrogen-containing base(s) and one or more polybasic acid(s), or
(ii) a salt from one or more organic nitrogen-containing base(s) and one or more polybasic acid(s), or
(iii) a betaine which contains within the molecule one or more nitrogen-containing basic group(s) and one or more polybasic acid group(s).

2. Surface treatment method according to claim 1, wherein a solvent is used in the treatment with (i) the base and the acid or with (ii) the salt thereof or (iii) the betaine.

3. Surface treatment method according to claim 1 or 2, wherein the treatment temperature lies in the range from 30 - 100°C.

4. Surface treatment method according to one of claims 1 - 3, wherein the molar ratio of base to acid (base/acid) in case (i) or (ii) or basic group/polybasic acid group in case (iii) is in the range from 1 - 5.

5. Surface treatment method according to one of claims 1 - 4, wherein the molar ratio of base to acid (base/acid) in case (i) or (ii) or basic group/polybasic acid group in case (iii) is in the range from 1 - 2.

6. Surface treatment method according to one of claims 1 - 5, case (i) or (ii), wherein the nitrogen-containing base contains from 2 - 30 carbon atoms.

7. Surface treatment method according to claim 6. case (i) or (ii), wherein the base is a primary, secondary or tertiary amine according to the formulae NH₂R, NHRR' or NRR'R", wherein R, R' and R" designate organic hydrocarbon radicals which may optionally be substituted and which contain in each case from 3 - 14 carbon atoms.

8. Surface treatment method according to one of claims 1 - 6, case (i) or (ii), wherein the base is an aromatic nitrogen-containing base having 3 - 30 carbon atoms.

9. Surface treatment method according to one of claims 1 - 6, case (i) or (ii), wherein the base is an alicyclic nitrogen-containing base having 2 - 30 carbon atoms.

10. Surface treatment method according to one of claims 1 - 9, wherein the polybasic acid in case (i) or (ii) or the polybasic acid group in case (iii) is selected from phosphorus-containing and sulphur-containing acids or acid groups.

11. Surface treatment method according to claim 10, case (i) or (ii), wherein the acid is selected from phosphoric acid, di-phosphoric acid, poly-phosphoric acids, organic phosphonic acids, organic di-phosphonic acids, organic polyphosphonic acids, phosphoric acid monoesters, phosphonic acid monoesters having at least two phosphonic acid ester groups, sulphuric acid, sulphurous acid, sulphonic acid, sulphuric acid monoesters having at least two sulphuric acid monoester groups and sulphonic acid monoesters having at least two sulphonic acid monoester groups.

12. Surface treatment method according to claim 11 or 10, case (i) or (ii), wherein the polybasic acid contains one or more organic group(s) which optionally contains one or more hydroxy, amine, or carboxylic acid or cyano function(s).

13. Surface treatment method according to one of claims 1 - 12, wherein at least one of the base(s) used in case (i) or (ii) or one of the nitrogen-containing basic groups present in case (iii) has a basicity to remove one proton from at least one of the acid(s) used (pK_{B} (base) ≤ pK_{S1} (acid)).

14. Surface treatment method according to one of claims 1 - 13, wherein essentially no metal ions are present during the treatment.

15. Nanoparticles which can be obtained by a surface treatment method according to one of claims 1 - 14.

16. Nanoparticle dispersion comprising a solvent and nanoparticles according to claim 15.

17. Use of nanoparticles according to claim 15 or a nanoparticle dispersion according to claim 16 in the production of inks, including security printing inks, in the surface modification of metallic or non-metallic substrates, as phosphorescent or fluorescent materials, as labelling for biological molecules, as polymer filler or as X-ray contrast agents.

## Revendications

1. Procédé de traitement de surface pour améliorer la capacité de dispersion de nanoparticules, qui ont été isolées après l'étape de synthèse et ont été éventuellement soumises à une ou plusieurs étapes de lavage après l'isolement, où le procédé comprend un traitement des nanoparticules avec
(i) une ou plusieurs bases azotées organiques et un ou plusieurs acides plurivalents, ou
(ii) un sel d'une ou plusieurs bases azotées organiques et d'un ou plusieurs acides plurivalents, ou
(iii) une bétaïne qui contient dans la molécule un ou plusieurs groupes basiques azotés et un ou plusieurs groupes acides plurivalents.

2. Procédé de traitement de surface selon la revendication 1, où lors du traitement avec (i) la base et l'acide ou avec (ii) le sel de ceux-ci ou (iii) la bétaïne, un solvant est utilisé.

3. Procédé de traitement de surface selon la revendication 1 ou 2, où la température de traitement est dans le domaine de 30 - 100 °C.

4. Procédé de traitement de surface selon l'une des revendications 1-3, où le rapport molaire de la base à l'acide (base/acide) dans le cas (i) ou (ii) ou groupe basique/groupe acide plurivalent dans le cas (iii) est dans le domaine de 1 -5.

5. Procédé de traitement de surface selon l'une des revendications 1-4, où le rapport molaire de la base à l'acide (base/acide) dans le cas (i) ou (ii) ou groupe basique/groupe acide plurivalent dans le cas (iii) est dans le domaine de 1 - 2.

6. Procédé de traitement de surface selon l'une des revendications 1-5, cas (i) ou (ii), où la base azotée contient 2-30 atomes de carbone.

7. Procédé de traitement de surface selon la revendication 6, cas (i) ou (ii), où la base est une amine primaire, secondaire ou tertiaire selon les formules NH₂R, NHRR' ou NRR'R", où R, R' et R" représentent des groupements hydrocarbonés organiques, qui peuvent éventuellement être substitués et qui contiennent chacun 3-14 atomes de carbone.

8. Procédé de traitement de surface selon l'une des revendications 1-6, cas (i) ou (ii), où la base est une base azotée aromatique ayant 3-30 atomes de carbone.

9. Procédé de traitement de surface selon l'une des revendications 1-6, cas (i) ou (ii), où la base est une base azotée alicyclique ayant 2-30 atomes de carbone.

10. Procédé de traitement de surface selon l'une des revendications 1-9, où l'acide plurivalent dans le cas (i) ou (ii) ou le groupe acide plurivalent dans le cas (iii) est choisi parmi les acides ou les groupes acides contenant du phosphore et du soufre.

11. Procédé de traitement de surface selon la revendication 10, cas (i) ou (ii), où l'acide est choisi parmi l'acide phosphorique, l'acide diphosphorique, les acides polyphosphoriques, les acides phosphoniques organiques, les acides diphosphoniques organiques, les acides polyphosphoniques organiques, les monoesters d'acide phosphorique, les monoesters d'acide phosphonique ayant au moins deux groupes ester d'acide phosphonique, l'acide sulfurique, l'acide sulfureux, l'acide sulfonique, les monoesters d'acide sulfurique ayant au moins deux groupes monoester d'acide sulfurique et les monoesters d'acide sulfonique ayant au moins deux groupes monoester d'acide sulfonique.

12. Procédé de traitement de surface selon la revendication 11 ou 10, cas (i) ou (ii), où l'acide plurivalent contient un ou plusieurs groupes organiques qui contiennent éventuellement une ou plusieurs fonctions hydroxy, amine ou acide carboxylique ou cyano.

13. Procédé de traitement de surface selon l'une des revendications 1-12, où au moins l'une des bases utilisées dans le cas (i) ou (ii) ou l'un des groupes basiques azotés présents dans le cas (iii) possède une basicité pour abstraire un proton d'au moins l'un des acides utilisés (pK_{B} (base) < pK_{S1} (acide)).

14. Procédé de traitement de surface selon l'une des revendications 1-13, où, lors du traitement, sensiblement aucun ion métallique n'est présent.

15. Nanoparticules pouvant être obtenues par un procédé de traitement de surface selon l'une des revendications 1-14.

16. Dispersion de nanoparticules comprenant un solvant et des nanoparticules selon la revendication 15.

17. Utilisation de nanoparticules selon la revendication 15 ou d'une dispersion de nanoparticules selon la revendication 16 dans la production d'encres, y compris d'encres d'impression de sécurité, dans la modification de surface de substrats métalliques ou non métalliques, comme matériaux phosphorescents ou fluorescents, comme marquage de molécules biologiques, comme charge de polymères ou comme agent de contraste pour rayons X.
